# EUROPEAN PATENT SPECIFICATION

(11) **EP 1 830 008 B1**
(45) Date of publication and mention of the grant of the patent: **26.07.2017**
(21) Application number: 07103360.9
(22) Date of filing: 01.03.2007
(51) Int. Cl.: E03C 1/02, E03C 1/14, F16L 5/02, E03C 1/12, E03C 1/04

(54) **Device for the collection of water from the outer surface of an extractable flexible hose associated to a sanitary apparatus**
Vorrichtung zum Sammeln von Wasser von der äußeren Oberfläche eines mit einer sanitären Vorrichtung verbundenen, herausziehbaren flexiblen Schlauches
Dispositif de collecte d'eau à partir de la surface extérieure d'un tuyau flexible extractible associé à un sanitaire

(30) Priority: 02.03.2006 IT TO20060156
(43) Date of publication of application: 05.09.2007
(73) Proprietor: CRS S.p.A., 20121 Milano (IT)
(72) Inventor: Wyss, Rolando c/o NOVECENTOUNDICI ENGINEERING ESTABLISHMENT, 9490 Vaduz (LI)
(74) Representative: Mitola, Marco

(56) References cited:
- EP-A2- 0 476 402
- WO-A1-01/38776
- DE-C1- 4 243 737
- DE-U1- 8 715 230
- JP-A- 401 043 632
- US-A- 3 680 780
- US-A- 4 856 121
- US-A- 5 826 919
- US-A1- 2003 084 937
- US-B1- 6 546 573

## Description

The present invention relates to the field of sanitary apparatuses of the type in which a flexible hose is provided for delivery of water, said flexible hose being extractable through a wall associated to the sanitary apparatus. In said apparatuses, when the hose is retracted after use, the water that inevitably remains on the outer surface of the hose trickles into the space underlying said wall, forcing the user to carry out continuous operations of cleaning.

In order to overcome said drawback, a wide range of devices has already been proposed (see, for example, JP 10 48939, JP 10 43632, JP 2004 267513) that envisage a container that is to collect the water that trickles from the outer surface of the flexible hose, once this is retracted into the housing space underlying the wall. In some known solutions, said container is to be emptied periodically. In others it is provided with a discharge connected to a discharge pipe of the sanitary apparatus.

Said known devices are relatively cumbersome, with consequent disadvantages of inconvenience of use and/or subtraction of useful space within the cabinet associated to the sanitary apparatus.

Documents US5826919, EP0476402, DE4243737 disclose a flexible penetration fitting for sealing a hole through which a pipe or a hose is inserted. These documents do not disclose a chamber for collection of water, said chamber comprising a connector defining a channel which is provided for the discharge of the water.

With a view to overcoming the drawbacks of known devices, the subject of the present invention is a device for collecting water from the outer surface of a flexible hose that can be extracted from a wall associated to a sanitary apparatus, according to claim 1.

Preferably, said water-collection container is fixed coaxially around said tubular body, so that the aforesaid collection chamber has an annular shape.

Preferably, said collection chamber is provided with a discharge connectable to a discharge piping of the sanitary apparatus, even though theoretically not excluded is the hypothesis of a water-collection container that can be dismantled for being emptied periodically.

Thanks to the characteristics referred to above, the device according to the invention does not require a large container for collecting the water that trickles off from the outer surface of the entire length of the hose or its prevalent part. Instead, the water-collection container of the device according to the invention can be of relatively contained dimensions and may be mounted in a position close to the wall from which the flexible hose is extracted. When, after use, the hose is retracted into the space lying underneath or behind the wall, it slides within the aforesaid sealing means, which are located in a position relatively close to the wall from which the hose is extracted, so that said sealing means remove the water from the outer surface of the hose as the hose slides within said means and force the water thus removed to trickle on the outside of the tubular guide body within which the hose is able to slide so that it is collected in the chamber that surrounds it at least in part.

In a preferred embodiment, the aforesaid sealing means are constituted by a bushing made of elastomeric material, which is axially extended and coaxial with the tubular guide body. Preferably the bushing embody a sort of extension of the tubular guide body; to this purpose, the bushing has an annular end edge secured to the tubular guide body of the flexible body, and an opposite annular edge engaged in a sealed way and sliding on the outer surface of the flexible hose. This arrangement enables both the need for a good seal and the need to make possible proper sliding of the flexible hose within the bushing to be met, particularly in so far as the hose is retracted in the wall, without any risk of jamming of the sealing end of the bushing against possible discontinuities on the outer surface of the flexible hose.

Preferably, said sealing edge has a longitudinal cross section with seal lip such that the aforesaid seal bushing has a greater diameter at its end secured to the tubular guide body, narrows up to a section of minimum diameter in a position axially intermediate between the two ends of the bushing, to re-open slightly in the direction of its opposite end. Said specific conformation of the seal bushing allows for further increasing the quality of the seal and sliding precision of the flexible hose within the bushing.

Once again in the case of a preferred embodiment, the aforesaid tubular guide body of the flexible hose is made of plastic material, integrally with a body defining at least part of the water-collection container, the latter being in a fixed position below or behind the above said wall.

Once again preferably, said body defining at least part of the container has an upper circumferential edge, connected, for example by means of a snap coupling or other means of fast coupling, to the lower end of a tubular supporting body set coaxially around the tubular guide body of the flexible hose and having an upper end provided with means for fixing to the wall. Said fixing means can comprise, for example, a fixing fitting with an upper flange that is to rest on the outer surface of the wall from which the flexible hose is extracted and that prolongs in a threaded tubular body which is screwed within the upper end of the aforesaid tubular supporting body, for the purpose of gripping the aforesaid wall between the upper flange of said fitting and a flange formed on the upper end of said tubular supporting body.

As may be seen, thanks to the characteristics referred to above, the device according to the invention, in addition to being of extremely contained dimensions, is also prearranged for being installed with extremely simple, convenient and fast operations and is readily adapted to different thicknesses of wall. The prevailing part of the device also remains below or behind the above said wall, and thus in a hidden position.

Further characteristics and advantages of the invention will emerge from the ensuing description, with reference to the annexed plate of drawings, which are provided purely by way of non-limiting example and in which:
- Figure 1 is an exploded perspective view of a preferred embodiment of the device according to the invention;
- Figure 2 is a cross-sectional view of the device of Figure 1, in which there is also schematically illustrated a portion of the flexible hose received within the device;
- Figure 3 is a cross-sectional view corresponding to that of Figure 2, in which the flexible hose has been removed;
- Figure 4 is an exploded perspective view of a second embodiment of the device according to the invention;
- Figure 5 is a cross-sectional view, similar to that of Figure 3, of the device of Figure 4;
- Figure 6 is an exploded perspective view of a third embodiment of the device according to the invention; and
- Figure 7 is a cross-sectional view, similar to that of Figure 3, of the device of Figure 6.

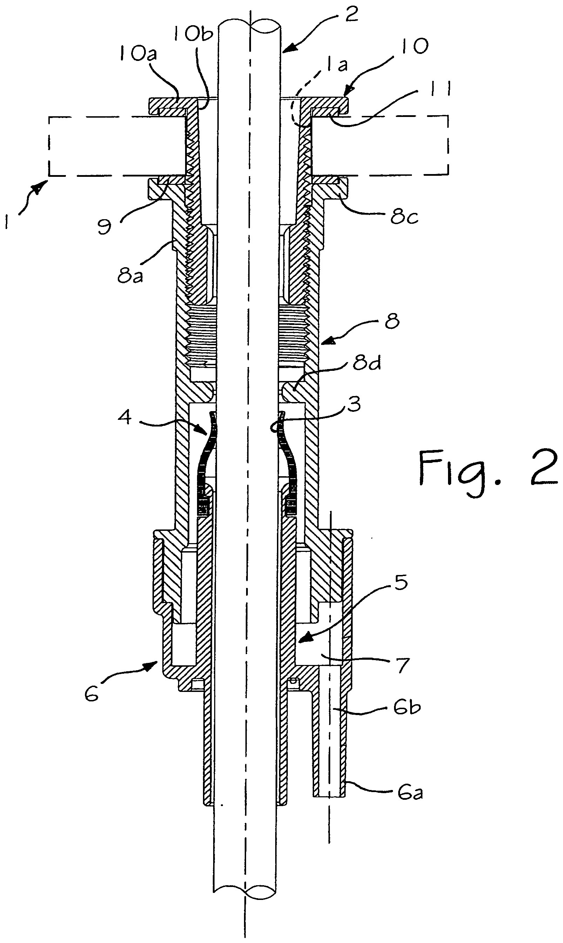

With reference to the drawings, and in particular to Figure 2, illustrated with a dashed line is a portion of a wall 1 associated to a sanitary apparatus of any type (not illustrated) and for any use (domestic, in public premises, etc.) of the type in which a flexible hose 2 for delivery of the water is provided, which terminates with a shower head or similar apparatus (not illustrated) and can be extracted for use from the wall 1 through an opening 1a made therein. After use, the flexible hose 2 is retracted within the space delimited by the wall 1, for example within a cabinet associated to the sanitary apparatus. The wall 1 can in fact belong, for example, to a wash basin or sink associated to a bathroom or kitchen cabinet, or else belong directly to said cabinet.

The flexible hose has its end opposite to the delivery end connected to a tap (not represented) normally prearranged adjacent to or on the same wall 1, so that, in the condition where it is retracted within the space underlying the wall 1, it assumes a substantially U-shaped development. Figure 2 of the annexed plate of drawings shows only the stretch of the hose that is located adjacent to the wall 1 and that has a substantially rectilinear development.

According to the invention, the flexible hose 2 is received in a slidable way within an annular seal lip 3 of a seal bushing 4, which is preferably axially extended, made of elastomeric material and having its lower end edge, opposite to the annular seal lip 3, secured to the upper end of a tubular body 5, serving as guide for sliding of the flexible hose 2. The tubular guide body 5 is fixed with respect to the wall 1 in a position relatively close thereto.

Provided around the tubular guide body 5 of the flexible hose 2 is a water-collection container 6 defining an annular chamber 7 for collection of water surrounding the tubular guide body 5. In the case of the specific embodiment illustrated, the water-collection container 6 is defined prevalently by a body made of plastic material formed integrally by moulding with the tubular guide body 5. The same body integrates also a connector 6a defining a channel, which is provided for discharge of the water 6b and is to be connected by means of a flexible hose to a discharge of the sanitary apparatus.

The upper circumferential edge of the body of the container 6 is fixed, in the way that will be described in detail in what follows, to the lower end of a tubular supporting body 8, which surrounds the tubular guide body 5 coaxially, spaced apart from it, and extends at the top up to an upper end 8a provided with means of connection to the wall 1 that will also be described in detail in what follows.

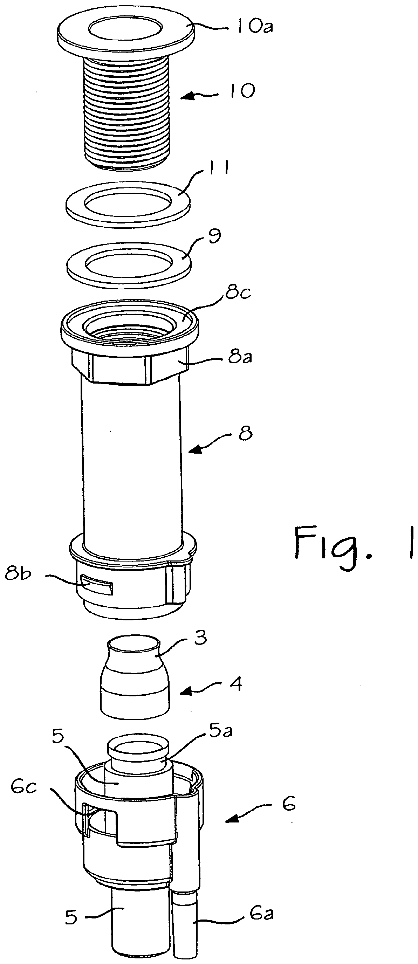

With reference in particular to Figure 1, the connection between the body 6 that integrates the tubular guide body 5 and the water-collection container, at the lower end of the tubular supporting body 8, which is also preferably made of plastic material, is obtained by means of snap-action coupling of teeth 8b (just one of which is visible in Figure 1), projecting from the wall of the tubular body 8, within seats 6c (just one of which is visible in Figure 1), provided in the circumferential wall of the water-collection container defined by the body 6.

Once again with reference to the specific embodiment illustrated, the upper end of the tubular guide body 5 has a circumferential groove 5a (Figure 1), which receives the lower end edge of the seal bushing 4 made of elastomeric material.

With reference again to the figures, the upper end 8a of the tubular supporting body 8 forms a flange 8c, which rests against the lower surface of the wall 1 with interposition of a seal ring 9 made of elastomeric material. The upper portion of the tubular supporting body 8 is internally threaded and receives by screwing the tubular body of a fixing fitting 10, the upper end of which defines a flange 10a that rests on the upper surface of the wall 1 with the interposition of a seal ring 11 made of elastomeric material. The device according to the invention can consequently be secured to the wall 1, gripping by screwing the tubular supporting body 8 (the end 8a of which has a hexagonal cross section for engagement of a manoeuvring implement) on the fitting 10, so as to clamp the wall 1 between the two opposed flanges 8c and 10a. In this way, the device can be mounted and dismantled with easy, convenient and fast operations and is readily adapted to different thicknesses of wall, for a wide range of variation of said thickness. The fitting 10 is preferably made of metal material, for example brass.

Preferably, moreover, the tubular body 8 has, in an intermediate region thereof, a transverse wall 8d, substantially perpendicular to the axis of body 5, defining a guide passage 8e for the hose 2, said wall 8d being positioned in the proximity of the end of the bushing 4 bearing the seal lip 3. In this way, in the stretch that extends between the upper end of the guide body 5 and the wall 8d - i.e., in the area in which the bushing 4 is positioned - the hose 2 necessarily maintains a rectilinear configuration.

In use, the flexible hose 2 is extracted from the wall 1, by gripping the shower head and moving it away from the wall 1. After use, the flexible hose is retracted within the space set at the bottom of the wall 1. In the course of said operation, the flexible hose 2 slides within the circumferential seal lip 3 that acts in a certain sense as "scraper", removing the residual water from the outer surface of the hose, preventing it from passing within the tubular guide body 5 and forcing it to trickle on the outside of the tubular guide body 5 and into the annular collection chamber 7. From said chamber, the collected water is conveyed through the connector 6a into the discharge of the sanitary apparatus.

With reference once again in particular to Figure 2, the preferred embodiment envisages a seal bushing 4 having a maximum diameter at its lower end. Starting from the lower end, the diameter of the bushing 4 narrows up to a cross section of minimum diameter that is axially intermediate between the two ends of the bushing, and then widens out again slightly at the upper end of the bushing. In this way, on the one hand there is ensured a perfect seal on the flexible hose 2; on the other hand, also due to the fact that the bushing 4 embodies a sort of axial extension of the guide body 5, there is prevented any risk that during sliding of the hose 2 within its seat after use, there may occur jamming of the upper end of the bushing 4 against possible discontinuities of the outer surface of the flexible hose 2. As has been mentioned, in a preferred embodiment the presence of the wall 8d with the corresponding guide passage 8e enables, in combination with the upper end of the tubular body 5, the substantially rectilinear configuration of the hose 2, in the region where this traverses the bushing 4, to be ensured. Note however that the wall 8d is not strictly necessary, by virtue of the position and shape of the bushing 4.

As is evident from the foregoing description, since the device according to the invention does not need to collect the water that trickles from the entire length of the hose, it can present relatively small dimensions and is provided in an area close to the wall from which the flexible hose is extracted for use. The prevailing part of the device according to the invention is positioned under or behind the wall 1, on the front of which only a small portion of the fitting 10 remains: most of the device is thus hidden from view.

Once again in the case of the embodiment illustrated, the fitting 10 defines with its internal surface a seat 10b shaped to receive a portion of the body of the shower head, in order to support it when the flexible hose is completely retracted. Note that also the seat 10b extends to a greater extent through the wall, or anyway below of behind the font thereof.

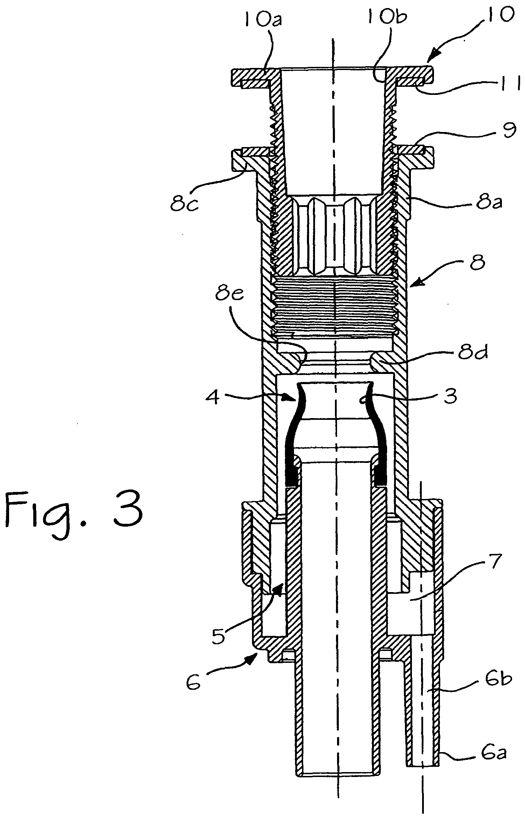

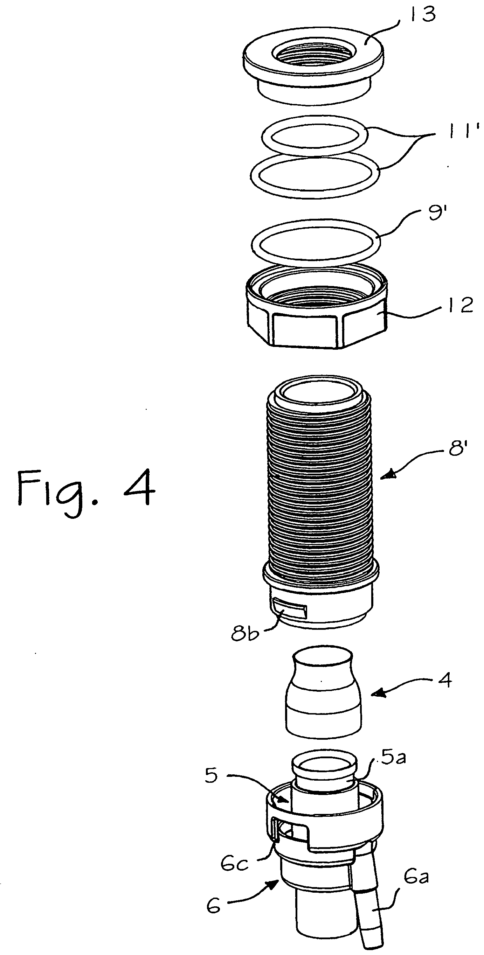

Illustrated in Figures 4-5 and 6-7 are two possible alternative embodiments of the device according to the invention. In said figures the same reference numbers as those of Figures 1-3 are used to designate components that are similar to the ones already described.

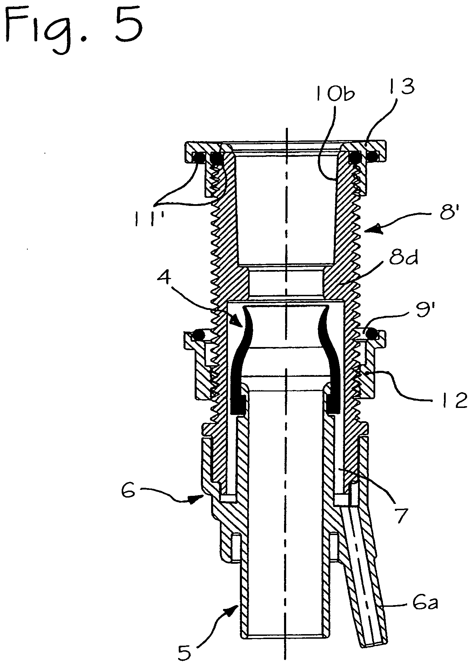

In the embodiment of Figures 4 and 5, the tubular supporting body, designated by 8', is without the parts 8a, 8c and has an external thread 8a' for being fitted to the wall in which the flexible hose is to pass via ring-nut elements 12 and 13, with possible interposition of annular sealing means 9' and 11', herein substantially of an O-ring type. The element 12, which is substantially a cap element, is screwed on the threaded part 8a' underneath the wall, whilst the element 13, which is substantially a locking ring, is screwed on the threaded part 8a above the wall 1, so that the wall itself is gripped between them, with the seal rings 9', 11' set in between. In this embodiment, the seat 10b for the shower head is made directly in the upper part of the tubular body 8'; the fixing fitting 10 is no longer necessary, a fact that enables reduction of the axial dimensions of the device. Also in this embodiment, as well as in the next one, the device is almost hidden from view, on the front of wall 1 remaining only a small portion of the element 13.

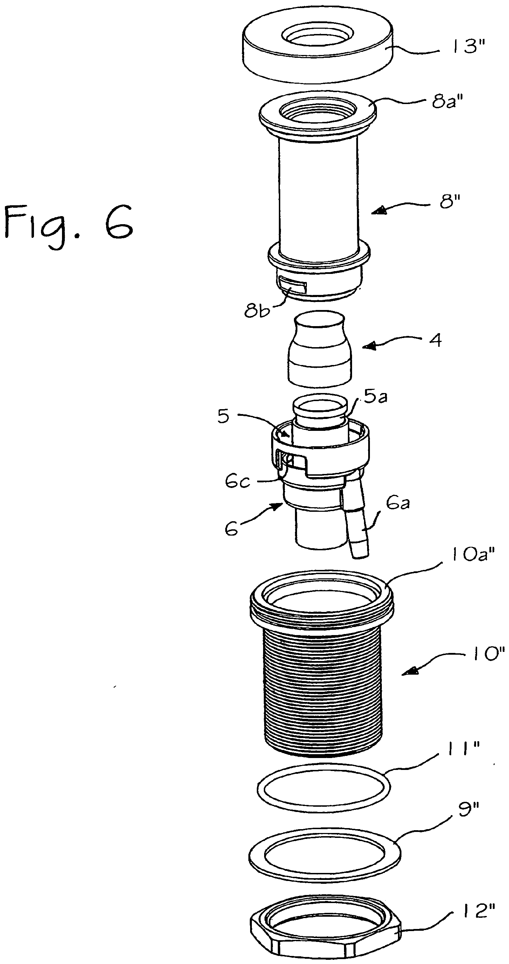

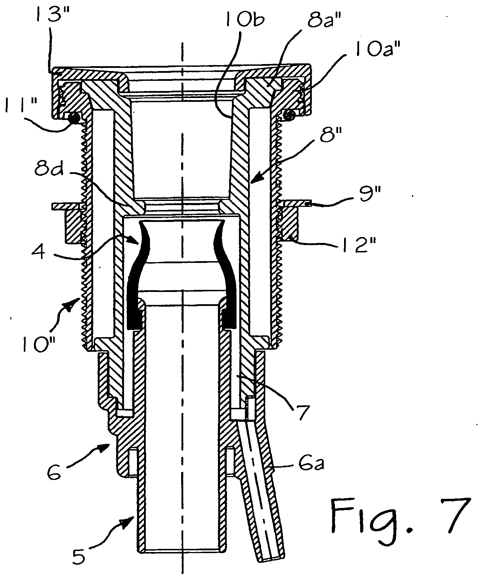

In the embodiment of Figures 6 and 7, the tubular supporting body, designated by 8", has at its upper end a simple flange part 8a"; also in this case the seat 10b for the shower head is made directly in the upper part of the tubular body 8". The variant moreover envisages the use of a fixing fitting 10" shaped to contain part of the ensemble formed by the tubular supporting body 8", the seal bushing 4, and the tubular guide body 5.

The body 8" is introduced from above into the fitting 10", with the flange 8a" that rests in a respective seat or slot formed at the upper end of the fitting 10", having a respective flange part 10a", on which a respective locking-ring element 13" is fixed. At the lower end of the body 8" there is then fitted the guide body 5, on which the bushing 4 is mounted, with the container 6. The flange part 10a" is to rest on the upper surface of the aforesaid wall, with possible interposition of a seal ring 11"; on the external thread of the fitting 10" a nut or ring-nut 12" is screwed from beneath, after prior positioning of an annular seal element 9", so as to grip the wall between the flange part 10a" and the nut 12".

Said embodiment enables, if need be, extraction of the entire block from the mounting hole, for example for replacement of the flexible hose or for an inspection, without any risk of damaging the gasket 4.

Of course, without prejudice to the principle of the invention, the details of construction and the embodiments may vary widely with respect to what is described and illustrated herein purely by way of example, without thereby departing from the scope of the present invention.

The device according to the invention can, if need be, be fixed also to a vertical wall 1, for example of a bathroom cabinet, kitchen cabinet, bar cabinet, etc. For a use of this sort, the chamber 7 does not necessarily have to be annular, so that, in a possible variant, said collection chamber surrounds only partially the tubular guide body 5; in this case, moreover, the discharge connector 6a will extend preferably in a direction perpendicular or in any case transverse with respect to the axial development of the body 5.

The sealing means 4 could possibly be carried by the body 8, at the same time maintaining their association in a sealed way to the tubular body 5.

## Claims

1. A device for collecting water from the outer surface of a flexible hose (2) for water delivery that is extractable from a wall (1) associated to a sanitary apparatus, said device comprising furthermore:
- a hose (2),
- a tubular guide body (5) of the extractable flexible hose (2), which can be fixed with respect to said wall (1), preferably in a position relatively close thereto, wherein
- said hose (2) is flexible and extractable,
- the device comprises a container (6) for collection of water, that surrounds at least partially said tubular guide body (5) so as to define a chamber (7) for collection of water; and
- sealing means (4), preferably carried by said tubular guide body (5), within which the flexible hose (2) is engaged in a slidable way, said sealing means being capable to prevent a passage of water between the outer surface of the flexible hose (2) and the internal surface of the tubular guide body (5) so as to force the water that has remained on the outer surface of the flexible hose (2) to trickle on the outside of the tubular guide body (5) within said collection chamber (7),
wherein said chamber (7) for collection of water comprises a connector (6a) defining a channel which is provided for the discharge of the water.

2. The device according to Claim 1, **characterized in that** said sealing means comprises an axially extended seal bushing (4).

3. The device according to Claim 2, **characterized in that** said seal bushing (4) has an end edge secured to the tubular guide body (5) and at the opposite end region a circumferential seal lip (3) for sliding engagement on the outer surface of the flexible hose (2), the seal bushing (4) forming in particular an axial extension of the tubular guide body (5).

4. The device according to at least one of the previous claims, **characterized in that**, in a mounted condition of the device, said container (6) for collection is in a fixed position below or behind said wall (1), said chamber for collection (7) being provided with a discharge connector (6a) connectable to the discharge of the apparatus.

5. The device according to Claim 1 or 4, **characterized in that** said container (6) for collection is substantially coaxial with said tubular guide body (5), said chamber (7) for collection having in particular a substantially annular shape.

6. The device according to Claim 1, **characterized in that** said container (6) for collection of water is at least in part defined by a body made of plastic material made integrally with said tubular guide body (5).

7. The device according to Claim 1, **characterized in that** said container (6) for collection of water is connected to a lower region of a tubular supporting body (8; 8'; 8") surrounding at least part of the tubular guide body (5) and extending at the top up to an end region (8a; 10a") provided with means for fixing to the aforesaid wall (1), said container (6) being in particular connected to said tubular supporting body (8; 8'; 8") by means of fast coupling means (6c, 8b).

8. The device according to Claim 7, **characterized in that** a lower portion of said tubular supporting body (8; 8'; 8") is inserted within the container (6) for collection of water, to define therewith at least a part of said chamber (7) for collection.

9. The device according to Claim 3, **characterized in that** said seal bushing (4) has a cross section of minimum diameter axially intermediate between its opposite ends so that said circumferential seal lip widens out from said section of minimum diameter in the direction of its circumferential end edge.

10. The device according to Claims 3 and 7, **characterized in that** said tubular supporting body (8) has, in an intermediate region thereof, a transverse wall (8d) defining a guide passage (8e) for the flexible hose (2), said wall (8d) extending in the proximity of the circumferential seal lip (3) of the bushing (4).

11. The device according to Claim 7, **characterized in that** said tubular supporting body (8') has an external thread to receive by screwing, at its upper end, a flange element (13) that is to rest against the upper surface of the aforesaid wall (1), with possible interposition of a first gasket (11'), the thread being able to receive by screwing a ring-nut element (12) that is to rest on the lower surface of the wall (1), with possible interposition of a second gasket (9").

12. The device according to Claim 7, **characterized in that** the upper end of said tubular supporting body (8") forms a flange (8a") and is received in a fitting (10") having a respective upper flange part (10a") that is to rest against the upper surface of the aforesaid wall (1), with possible interposition of a first gasket (11"), the flange part (10a") of the drain (10") defining a rest for the flange (8a") of the tubular supporting body (8"), the drain (10") having an external thread to receive by screwing a nut or the like (12"), that is to rest on the lower surface of the wall (1), with possible interposition of a second gasket (9").

13. The device according to Claim 7 or else Claim 11 or else Claim 12, **characterized in that** said tubular supporting body (8'; 8") has an internal surface defining a seat (10b) to receive at least part of a water delivery head fixed to the delivery end of the flexible hose (2), in order to support it in a respective resting position.

14. The device according to Claim 7, **characterized in that** the upper end of said tubular supporting body (8) forms a flange (8c) that is to rest against the lower surface of the aforesaid wall (1), with possible interposition of a first gasket (9), and is internally threaded to receive by screwing the body of a fitting (10) having an upper flange (10a) that is to rest on the upper surface of the wall (1), with possible interposition of a second gasket (11), where in particular said fitting (10) has an internal surface defining a seat (10b) to receive at least part of a water delivery head fixed to the delivery end of the flexible hose (2), in order to support it in a respective resting position.

## Patentansprüche

1. Vorrichtung zum Sammeln von Wasser von einer Außenfläche eines flexiblen Schlauches (2) zur Wasserabgabe, welcher herausziehbar von einer Wand (1) mit einem sanitären Gerät verbunden ist, wobei die Vorrichtung darüber hinaus umfasst:
- einen Schlauch (2),
- einen rohrförmigen Führungskörper (5) des herausziehbaren flexiblen Schlauches (2), welcher fest mit der Wand (1) verbunden werden kann, vorzugsweise an einer Stelle relativ nah an derselben, wobei
- der Schlauch (2) flexibel und herausziehbar ist;
- die Vorrichtung umfasst einen Behälter (6) zur Sammlung von Wasser, welcher zumindest teilweise den rohrförmigen Führungskörper (5) umgibt, so dass eine Kammer (7) zur Sammlung von Wasser gebildet wird; und
- ein Dichtmittel (4), das vorzugsweise von dem rohrförmigen Führungskörper (5), in welchem der flexible Schlauch (2) auf eine bewegliche Art befestigt ist, getragen wird, wobei das Dichtmittel in der Lage ist einen Durchtritt von Wasser zwischen der Außenfläche des flexiblen Schlauches (2) und der Innenfläche des rohrförmigen Führungskörpers (5) zu verhindern, so dass das Wasser, welches auf der Außenfläche des flexiblen Schlauches (2) zurückgeblieben ist, dazu gezwungen wird auf der Außenseite des rohrförmigen Führungskörpers (5) innerhalb der Sammelkammer (7) zu fließen bzw. tropfen,
wobei die Kammer (7) zur Sammlung von Wasser einen Verbinder (6a) umfasst, wodurch ein Kanal definiert wird, der für den Auslass des Wassers vorgesehen ist.

2. Vorrichtung nach Anspruch 1, **dadurch gekennzeichnet, dass** die Dichtungseinrichtung eine sich axial erstreckende Abdichtdurchführung (4) umfasst.

3. Vorrichtung nach Anspruch 2, **dadurch gekennzeichnet, dass** die Abdichtdurchführung (4) eine Endkante, welche an dem rohrförmigen Führungskörper (5) befestigt ist, und an dem gegenüberliegenden Endbereich eine umlaufende Dichtlippe (3) für einen Gleiteingriff auf die Außenfläche des flexiblen Schlauches (2) aufweist, wobei die Abdichtdurchführung (4) insbesondere eine axiale Erweiterung des rohrförmigen Führungskörper (5) bildet.

4. Vorrichtung nach zumindest einem der vorgehenden Ansprüche, **dadurch gekennzeichnet, dass** sich in einem montierten Zustand der Vorrichtung der Behälter (6) zur Sammlung in einer fixierten Position unter oder hinter der Wand (1) befindet, wobei die Kammer zur Sammlung (7) mit einem Auslassverbinder (6a) vorgesehen ist, der mit dem Auslass des Geräts verbindbar ist.

5. Vorrichtung nach Anspruch 1 oder 4, **dadurch gekennzeichnet, dass** der Behälter (6) zur Sammlung im Wesentlichen koaxial mit dem rohrförmigen Führungskörper (5) ausgebildet ist, wobei die Kammer (7) zur Sammlung insbesondere im Wesentlichen ringförmig ist.

6. Vorrichtung nach Anspruch 1, **dadurch gekennzeichnet, dass** der Behälter (6) zur Sammlung von Wasser zumindest teilweise durch einen Körper gebildet wird, der aus Kunststoff und integral mit dem rohrförmigen Führungskörper (5) hergestellt ist.

7. Vorrichtung nach Anspruch 1, **gekennzeichnet dadurch, dass** der Behälter (6) zur Sammlung von Wasser mit einem unteren Bereich eines rohrförmigen Stützkörpers (8; 8'; 8") verbunden ist, welcher zumindest teilweise den rohrförmigen Führungskörper (5) umgibt und sich an der Oberseite bis zu einem Endbereich (8a; 10a") erstreckt, welcher mit Mitteln zum Befestigen an der vorgenannten Wand (1) vorgesehen ist, wobei der Behälter (6) insbesondere mit dem rohrförmigen Stützkörper (8; 8'; 8") mittels eines Schnellkupplungsmittels (6c, 8b) verbunden ist.

8. Vorrichtung nach Anspruch 7, **dadurch gekennzeichnet, dass** ein unterer Abschnitt des rohrförmigen Stützkörpers (8; 8'; 8") in den Behälter (6) zur Sammlung von Wasser eingeführt ist, um hierdurch zumindest ein Teil der Kammer (7) zur Sammlung zu bilden.

9. Vorrichtung nach Anspruch 3, **dadurch gekennzeichnet, dass** die Abdichtdurchführung (4) einen Querschnitt mit minimalem Durchmesser in Axialrichtung zwischen ihren einander gegenüberliegenden Enden aufweist, so dass sich die umlaufende Dichtungslippe von dem Abschnitt mit minimalem Durchmesser in Richtung ihrer umlaufenden Endkante erweitert.

10. Vorrichtung nach Anspruch 3 und 7, **dadurch gekennzeichnet, dass** der rohrförmige Stützkörper (8) in einem Zwischenbereich desselben eine Querwand (8d) aufweist, welche eine Führungspassage (8e) für den flexiblen Schlauch (2) bildet, wobei sich die Wand (8d) in der Nähe der umlaufenden Dichtungslippe (3) der Durchführung (4) erstreckt.

11. Vorrichtung nach Anspruch 7, **dadurch gekennzeichnet, dass** der rohrförmige Stützkörper (8') ein Außengewinde aufweist, um durch Einschrauben an dessen oberen Ende ein Flanschelement (13) aufzunehmen, welches gegen die obere Fläche der vorgenannten Wand (1), mit möglicher Einfügung einer ersten Dichtung (11'), ruhen soll, wobei das Gewinde fähig ist, durch Einschrauben ein Ringmutterelement (12) aufzunehmen, welches auf der unteren Fläche der Wand (1), mit möglicher Einfügung einer zweiten Dichtung (9"), ruhen soll.

12. Vorrichtung nach Anspruch 7, **dadurch gekennzeichnet, dass** das obere Ende des rohrförmigen Stützkörpers (8") einen Flansch (8a") bildet und von einem Fitting (10") aufgenommen wird, welches ein entsprechendes oberes Flanschteil (10a") aufweist, das gegen die obere Fläche der vorgenannten Wand (1), mit möglicher Einfügung einer ersten Dichtung (11"), ruhen soll, wobei der Flanschteil (10a") des Abflusses (10") eine Auflage für den Flansch (8a") des rohrförmigen Stützkörpers (8") bildet, wobei der Abfluss (10") ein Außengewinde aufweist, um durch Einschrauben eine Mutter oder Vergleichbares (12") aufzunehmen, welche gegen die untere Fläche der Wand (1), mit möglicher Einfügung einer zweiten Dichtung (9"), ruhen soll.

13. Vorrichtung nach entweder Anspruch 7 oder Anspruch 11 oder Anspruch 12, **dadurch gekennzeichnet, dass** der rohrförmige Stützkörper (8'; 8") eine Innenfläche aufweist, die einen Sitz (10b) zur Aufnahme von zumindest einem Teil eines Wasserausgabekopfes bildet, welcher an dem Ausgabeende des flexiblen Schlauches (2) befestigt ist, um ihn dadurch in einer entsprechenden Ruhestellung zu stützen.

14. Vorrichtung nach Anspruch 7, **dadurch gekennzeichnet, dass** das obere Ende des rohrförmigen Stützkörpers (8) einen Flansch (8c) bildet, der gegen die untere Oberfläche der vorgenannten Wand (1), mit möglicher Einfügung einer ersten Dichtung (9), ruhen soll und mit einem Innengewinde versehen ist, um durch Einschrauben den Körper eines Fitting (10) aufzunehmen, welches einen oberen Flansch (10a) aufweist, der auf der oberen Fläche der Wand (1), mit möglicher Einfügung einer zweiten Dichtung (11), ruhen soll, wobei insbesondere das Fitting (10) eine Innenfläche aufweist, die einen Sitz (10b) zur Aufnahme von zumindest einem Teil eines Wasserausgabekopfes bildet, welcher an dem Ausgabeende des flexiblen Schlauches (2) befestigt ist, um ihn dadurch in einer entsprechenden Ruhestellung zu stützen.

## Revendications

1. Dispositif pour collecter de l'eau de la surface extérieure d'un tuyau flexible (2) pour la fourniture d'eau qui peut être extraite d'une paroi (1) associée à un appareil sanitaire, ledit dispositif comprenant de plus :
- un tuyau (2),
- un corps de guidage tubulaire (5) du tuyau flexible extractible (2) qui peut être fixé par rapport à ladite paroi (1), de préférence dans une position relativement proche de celle-ci, dans lequel
- ledit tuyau (2) est flexible et extractible,
- le dispositif comprend un contenant (6) pour la collecte d'eau qui entoure au moins partiellement ledit corps de guidage tubulaire (5) de sorte à définir une chambre (7) pour la collecte d'eau ; et
- un moyen étanche (4), porté de préférence par ledit corps de guidage tubulaire (5), dans lequel le tuyau flexible (2) est engagé de manière coulissante, ledit moyen étanche étant capable d'empêcher un passage d'eau entre la surface extérieure du tuyau flexible (2) et la surface intérieure du corps de guidage tubulaire (5) de sorte à forcer l'eau qui est restée sur la surface extérieure du tuyau flexible (2) à couler sur le côté extérieur du corps de guidage tubulaire (5) dans ladite chambre de collecte (7),
dans lequel ladite chambre (7) pour collecter l'eau comprend un connecteur (6a) définissant un canal qui est prévu pour l'évacuation de l'eau.

2. Dispositif selon la revendication 1, **caractérisé en ce que** ledit moyen étanche comprend une bague d'étanchéité (4) étendue axialement.

3. Dispositif selon la revendication 2, **caractérisé en ce que** ladite bague d'étanchéité (4) a une arête d'extrémité fixée au corps de guidage tubulaire (5) et sur la région d'extrémité en regard, une lèvre étanche circonférentielle (3) pour l'engagement coulissant sur la surface extérieure du tuyau flexible (2), la bague d'étanchéité (4) formant en particulier une extension axiale du corps de guidage tubulaire (5).

4. Dispositif selon au moins une quelconque des revendications précédentes, **caractérisé en ce que** dans une condition montée du dispositif, ledit contenant (6) pour la collecte est dans une position fixée sous ou derrière ladite paroi (1), ladite chambre pour la collecte (7) étant dotée d'un connecteur d'évacuation (6a) pouvant être relié à l'évacuation de l'appareil.

5. Dispositif selon la revendication 1 ou 4, **caractérisé en ce que** ledit contenant (6) pour la collecte est sensiblement coaxial avec ledit corps de guidage tubulaire (5), ladite chambre (7) pour la collecte présentant en particulier une forme sensiblement annulaire.

6. Dispositif selon la revendication 1, **caractérisé en ce que** ledit contenant (6) pour la collecte d'eau est au moins en partie défini par un corps constitué de matériau plastique fait intégralement avec ledit corps de guidage tubulaire (5).

7. Dispositif selon la revendication 1, **caractérisé en ce que** ledit contenant (6) pour la collecte d'eau est relié à une région inférieure d'un corps de support tubulaire (8 ; 8' ; 8") entourant au moins une partie du corps de guidage tubulaire (5) et s'étendant sur le dessus jusqu'à une région d'extrémité (8a ; 10a") dotée de moyens pour la fixation sur la paroi susmentionnée (1), ledit contenant (6) étant en particulier relié audit corps de support tubulaire (8 ; 8' ; 8") à l'aide de moyens de couplage rapide (6c ; 8b).

8. Dispositif selon la revendication 7, **caractérisé en ce qu'**une partie inférieure dudit corps de support tubulaire (8 ; 8' ; 8") est insérée dans le contenant (6) pour la collecte d'eau, pour définir avec celui-ci au moins une partie de ladite chambre (7) pour la collecte.

9. Dispositif selon la revendication 3, **caractérisé en ce que** ladite bague d'étanchéité (4) a une section transversale de diamètre minimum axialement intermédiaire entre ses extrémités en regard de sorte que ladite lèvre étanche circonférentielle s'élargisse depuis ladite section de diamètre minimum dans la direction de son arête d'extrémité circonférentielle.

10. Dispositif selon les revendications 3 et 7, **caractérisé en ce que** ledit corps de support tubulaire (8) a, dans une région intermédiaire de celui-ci, une paroi transversale (8d) définissant un passage de guidage (8e) pour le tuyau flexible (2), ladite paroi (8d) s'étendant à proximité de la lèvre étanche circonférentielle (3) de la bague (4).

11. Dispositif selon la revendication 7, **caractérisé en ce que** ledit corps de support tubulaire (8') a un filet externe pour recevoir par vissage, sur son extrémité supérieure, un élément de bride (13) qui doit reposer contre la surface supérieure de la paroi susmentionnée (1) avec possible interposition d'un premier joint (11'), le filet étant capable de recevoir par vissage un élément de couronne de liaison (12) qui doit reposer sur la surface inférieure de la paroi (1) avec possible interposition d'un second joint (9").

12. Dispositif selon la revendication 7, **caractérisé en ce que** l'extrémité supérieure dudit corps de support tubulaire (8") forme une bride (8a") et est reçue dans un raccord (10") présentant une partie de bride supérieure respective (10a") qui doit reposer contre la surface supérieure de la paroi susmentionnée (1), avec possible interposition d'un premier joint (11"), la partie de bride (10a") du drain (10") définissant un appui pour la bride (8a") du corps de support tubulaire (8"), le drain (10") présentant un filet externe pour recevoir par vissage un écrou ou similaire (12") qui doit reposer sur la surface inférieure de la paroi (1), avec possible interposition d'un second joint (9").

13. Dispositif selon la revendication 7 ou autre revendication 11 ou autre revendication 12, **caractérisé en ce que** ledit corps de support tubulaire (8' ; 8") a une surface interne définissant un siège (10b) pour recevoir au moins une partie d'une tête de fourniture d'eau fixée à l'extrémité de fourniture du tuyau flexible (2), afin de la supporter dans une position de repos respective.

14. Dispositif selon la revendication 7, **caractérisé en ce que** l'extrémité supérieure dudit corps de support tubulaire (8) forme une bride (8c) qui doit reposer contre la surface inférieure de la paroi susmentionnée (1) avec possible interposition d'un premier joint (9), et est fileté en interne pour recevoir par vissage le corps d'un raccord (10) présentant une bride supérieure (10a) qui doit reposer sur la surface supérieure de la paroi (1), avec possible interposition d'un second joint (11), où en particulier ledit raccord (10) a une surface interne définissant un siège (10b) pour recevoir au moins une partie d'une tête de fourniture d'eau fixée à l'extrémité de fourniture du tuyau flexible (2), afin de la supporter dans une position de repos respective.
